# EUROPÄISCHE PATENTSCHRIFT

(11) **EP 0 533 072 B1**
(45) Veröffentlichungstag und Bekanntmachung des Hinweises auf die Patenterteilung: **17.05.1995**
(21) Anmeldenummer: 92115601.4
(22) Anmeldetag: 11.09.1992
(51) Int. Cl.: F24D 13/02

(54) **Flachheizkörper**
Flat heating element
Elément de chauffage plat

(30) Priorität: 18.09.1991 DE 9111605 U; 20.03.1992 DE 4209124
(43) Veröffentlichungstag der Anmeldung: 24.03.1993
(73) Patentinhaber: MAGMA Flächenheizsysteme + Vertrieb GmbH, D-97508 Grettstadt-Obereuerheim (DE)
(72) Erfinder: Knappe, Bernhard, D-97508 Grettstadt-Obereuerheim (DE)
(74) Vertreter: Kruspig, Volkmar, Dipl.-Ing.

(56) Entgegenhaltungen:
- CH-A- 499 942
- DE-A- 2 206 268
- DE-A- 2 346 648
- DE-A- 3 742 559

## Beschreibung

Die Erfindung betrifft einen Flachheizkörper gemäß Oberbegriff des Patentanspruches 1.

Aus der EP-A-0 025 959 B1 ist ein Verfahren zur Herstellung einer Natursteinplatte für eine Flächenheizung bekannt, die auf einer Seite mäanderförmige Kanäle zur Aufnahme eines Heizrohres oder eines elektrischen Heizleiters aufweist.

Die kreisbogenförmigen Umlenkabschnitte zur Aufnahme des Heizrohres an den Endbereichen werden mittels eines kreisringförmigen Schneidkopfes in die Steinplatte eingeschnitten. Nach dem Einlegen der Heizrohre wird der verbleibende hohle Raum mit einem Füllstoff, beispielsweise einem Kunstharz, ausgefüllt.

Durch eine besondere Gestaltung einer fortlaufenden Reihe von Ringnuten soll je Flächeneinheit der Platte eine möglichst große Länge eines Wärmeträgers untergebracht werden.

Aus dem Vorstehenden ist ersichtlich, daß eine aufwendige mechanische Bearbeitung des verhältnismäßig harten Natursteinwerkstoffes erforderlich ist, wobei zum ausreichenden mechanischen Fixieren der Wärmeträger, z.B. des Heizrohres, ein anschließendes Verfüllen der erzeugten Aussparungen notwendig ist.

Durch die große Anzahl von Aussparungen, welche zur Aufnahme möglichst großer Längen des Heizrohres notwendig sind, verringert sich die Wärmekapazität der Flächenheizung.

Ein weiterer Nachteil besteht darin, daß mit der Lösung nach EP-A-0 025 959 nur ebene Flächenheizer ausgebildet werden können und damit die Anwendung der derart hergestellten Heizer eingeschränkt ist.

Auch ist es nicht möglich, für die Heizung erforderliche Bedien- und Anzeigeelemente in einem Arbeitsgang in die Flächenheizung zu integrieren, so daß der Kostenaufwand bei der Herstellung weiter ansteigt.

Aus der DE-A-23 46 648 ist ein Flachheizkörper vorbekannt, der im Inneren einer durch Warmformpressen hergestellten Platte einen Widerstandsheizdraht aufweist. Das Plattenmaterial besteht dort aus einem Gemisch aus Sägemehl, Holzstückchen usw., die mit einem Phenolharzpulver als Bindemittel versehen sind. Ein derartiges Gemisch besitzt jedoch einen zu geringen Flammpunkt, so daß die abstrahlbare Heizleistung begrenzt und die Durchschlagsfestigkeit und damit die Sicherheit beim Betrieb einer derartigen Flachheizung nur gering ist.

Aus der DE-A-22 06 268 ist ein elektrisch erwärmbarer, aus plattenförmigen Heizkörpern bestehender Deckbelag bekannt. Die dortige Lösung verwendet einen hydraulisch gebundenen Bauwerkstoff, welcher eine metallische Armierung aufweist.

Auf der metallischen Armierung ist ein elektrischer Heizleiter angeordnet. Zur Vermeidung der Wärmeleitung hin zum Straßenbett ist zusätzlich ein wärmeisolierender Schaumstoffkörper vorgesehen. Dadurch, daß der hydraulische Bauwerkstoff ein üblicher Mörtel ist, welcher aus einem Gemisch von Bindemittel, Sand und Wasser besteht, ist die Gefahr der nachträglichen Feuchtigkeitsaufnahme mit dem Ergebnis elektrischer Durchschläge groß und zusätzlich besteht das Problem, daß die abstrahlbare elektrische Heizleistung begrenzt ist, da durch vorhandene Feuchtigkeit und aufgrund der Struktur des hydraulischen Bindemittels Rißbildungen im Deckbelag unvermeidbar sind.

Der gleiche Nachteil tritt bei der CH-A-499 942, die ein Flächenheizelement mit einem auf einer Matte schlangenförmig befestigten Heizleiter zeigt, auf. Dort wird zwar ein Heizelement zum Beheizen von Räumen offenbart, wobei der Heizleiter zusammen mit einer Matte von einer Vergußmasse umschlossen ist, jedoch besteht die Vergußmasse aus Gips oder aus einem wärmebeständigen Kunststoff. Im Falle der Verwendung von Gips ist eine nachträgliche Feuchtigkeitsaufnahme mit den geschilderten Nachteilen unvermeidbar. Wenn zur Vermeidung der nachteiligen Feuchteaufnahme wärmebeständiger Kunststoff verwendet wird, tritt jedoch das Problem auf, daß aufgrund der Temperaturerhöhung im Inneren des Flächenheizelementes die Gefahr der örtlichen irreversiblen Zerstörung der Vergußmasse besteht.

Die flachbauende, freitragende Bodenplatte für beheizbare Doppelböden gemäß DE-A-37 42 559 A1 beschreibt die Lösung des Problems, bei Bodenplatten geringer Bauhöhe die elektrische Heizleitung in einer Ebene gleichmäßig in ein mineralisches Material einzubetten, bevor dieses aushärtet. Hierfür wird ein spezieller Wannenboden für die Schicht aus mineralischem Material mit halsförmig nach innen gezogenen Rändern vorgesehen. Die Heizleitung ist gemäß der Lehre der DE-A-37 42 559 A1 an über dem Wannenboden verteilt angeordneten Haltern befestigt, wobei diese wiederum an ausgewählten Verankerungsöffnungen im Wannenboden fixiert sind. Bei dem Material für die Bodenplatte selbst handelt es sich um ein mineralisch ausgehärtetes Anhydrit, d.h. Gips bzw. Beton. Damit treten aber die bereits geschilderten Nachteile bezüglich der Durchschlagsfestigkeit und der Rißbildung im Betrieb einer derartigen, beheizten Bodenplatte auf.

Es ist daher Aufgabe der Erfindung, einen Flachheizkörper unter Verwendung von elektrischen Heizleitern anzugeben, welcher in beliebiger Form einfach herstellbar ist, der weiterhin über eine hohe Wärmekapazität verfügt und mit dem eine ausreichende elektrische Heizleistung erreicht werden kann, ohne daß irreversible Beschädigungen des Flachheizkörpers auftreten.

Die Lösung der Aufgabe der Erfindung erfolgt mit den Merkmalen des Patentanspruches 1, wobei die Unteransprüche zweckmäßige Ausgestaltungen und Weiterbildungen des Hauptanspruches umfassen.

Der Flachheizkörper weist zweckmäßigerweise einen Thermostaten auf, der in einem Bereich des Heizkörpers, welcher frei von Heizleitern ist und nicht in direktem Wärmekontakt zum Heizkörper steht, angeordnet ist.

Hierdurch wird in überraschender Weise eine sich aus der Umgebungstemperatur und der Flachheizkörpertemperatur ergebende Mischtemperatur erfaßt, so daß eine optimale Regelung unter Ausnutzung der Wärmekapazität des Heizkörpers bei gleichzeitigem energiesparenden Betrieb möglich ist.

Vorteilhafterweise sind in dem rückseitigen Bereich des Flachheizkörpers bereits bei der Herstellung Befestigungselemente, z.B. Buchsen, Stifte oder spezielle Halterungselemente integriert.

In einer Ausführungsform des Flachheizkörpers verfügt dieser über einen Gitterrahmen mit scheibenförmigen Umlenkelementen und Nuten zur Aufnahme des elektrischen Heizleiters sowie von Befestigungselementen.

Der Gitterrahmen besteht zur Vermeidung von wärme- bzw. ausdehnungsbedingten Rissen zweckmäßigerweise aus dem gleichen Kunststeinmaterial nämlich Polymerbeton wie der Flachheizkörper.

Gleichzeitig sind an dem Gitterrahmen spezielle Abstandshalter vorgesehen, die eine vorgebbare Lage des mit dem Heizleiter bespannten Gitterrahmens in einer Fertigungsform sichern.

Die Abstandshalter können dabei mit dem Gitterrahmen integral ausgebildet sein.

Durch die Verwendung des Gitterrahmens kann der Heizeinsatz des monolithischen Flachheizkörpers quasi vorgefertigt und elektrisch geprüft werden, bevor die Endfertigung des Heizkörpers erfolgt. Der Gitterrahmen selbst kann beliebige Formen aufweisen, so daß hierdurch keine Einschränkungen hinsichtlich der Endform des Flachheizkörpers gegeben sind. Auch ist die Verwendung von Standard-Gitterrahmen mit definierten Abmessungen und entsprechender äquivalenter elektrischer Leistung der auf ihm fixierten Heizelemente möglich.

Nachstehend soll das Verfahren zur Herstellung des Flachheizkörpers unter Verwendung von elektrischen Heizleitern beschrieben werden.

Wie bereits vorerwähnt, besteht der monolithische Flachheizkörper aus Kunststeinmaterial nämlich Polymerbeton und weist im Innern angeordnete elektrische Heizleiter auf.

Die Formgebung des Flachheizkörpers erfolgt durch ein Formspritz-, Gieß- oder Preßverfahren, wobei durch die gewählte Fertigungsform jede beliebige Flächenkonfiguration für den Heizleiter möglich ist.

Vorteilhafterweise werden die elektrischen Heizleiter und die Befestigungselemente auf dem Gitterrahmen vorfixiert und anschließend mit der Kunststeinmasse umspritzt, umgossen oder umpreßt.

Alternativ ist es möglich, beispielsweise die Spritz-, Gieß- oder Preßform so auszubilden, daß z.B. auf dem Formendeckel oder Formenboden Stifte zur beabstandeten Aufnahme und zum Vorfixieren des Heizleiters sowie der Befestigungselemente vorgesehen sind.

Nach dem Auflegen oder Aufwickeln des elektrischen Heizleiters sowie der Anordnung weiterer Elemente und ggf. einer elektrischen Vorprüfung, wird dann in einem Arbeitsgang das vorerwähnte Spritzen, Gießen oder Pressen mittels des flüssigen oder pastösen Polymerbeton vorgenommen.

Bei dieser Ausführungsvariante kann insbesondere bei großen Stückzahlen eine weitere Erhöhung der Produktivität erfolgen.

Wenn das Formgebungsverfahren mittels Rütteltisch oder Vakuumunterstützung durchgeführt wird, ergibt sich eine besonders hohe Oberflächenqualität des Flachheizkörpers, so daß Nachbearbeitungen weitgehend entfallen können.

Mittels des vorstehend geschilderten Verfahrens ist es also möglich, einen monolithischen Flachheizkörper aus Polymerbeton in beliebiger Form herzustellen, welcher neue Anwendungsgebiete erschließt.

Durch beispielsweise winklige oder Kreisbogenformen ist der Heizkörper auch an bisher unzugänglichen Stellen dort anordenbar, wo die Wärmequelle gewünscht und zweckmäßig ist.

Die monolithische Ausbildung mit von außen unzugänglichen Heizleitern gewährt eine hohe Berührungssicherheit bei gleichzeitiger geringer Störanfälligkeit der Gesamtanordnung.

Mittels des Spritzens, Gießens oder Pressens sind nicht nur ebene Oberflächen des Flachheizkörpers, sondern auch Strukturierungen zur wirksamen Vergrößerung der Strahlungsfläche sowie die Integration von Designelementen oder Ablagen und Halterungen für spezielle Verwendungen des Heizkörpers, z.B. in Bädern und dgl., realisierbar.

Weitere Einzelheiten und Merkmale der Erfindung ergeben sich anhand der folgenden Beschreibung bevorzugter Ausführungsbeispiele. Hierbei zeigen
- Fig. 1: einen Längsschnitt durch einen Flachheizkörper mit bereits integrierten elektrischen Heizleitern ohne Gitterrahmen
- Fig. 2: den Raum zur Aufnahme des Thermostaten und der äußeren elektrischen Anschlußelemente
- Fig.3: den in die Form eingelegten Gitterrahmen einschließlich des aufgeflochtenen Heizleiters
- Fig. 4: den Gitterrahmen mit Heizleiter und Abstandshaltern
- Fig. 5 und 6: jeweils Teilschnittdarstellungen mit Umlenkelementen bzw. Nuten zur Aufnahme des Heizleiters auf dem Gitterrahmen.

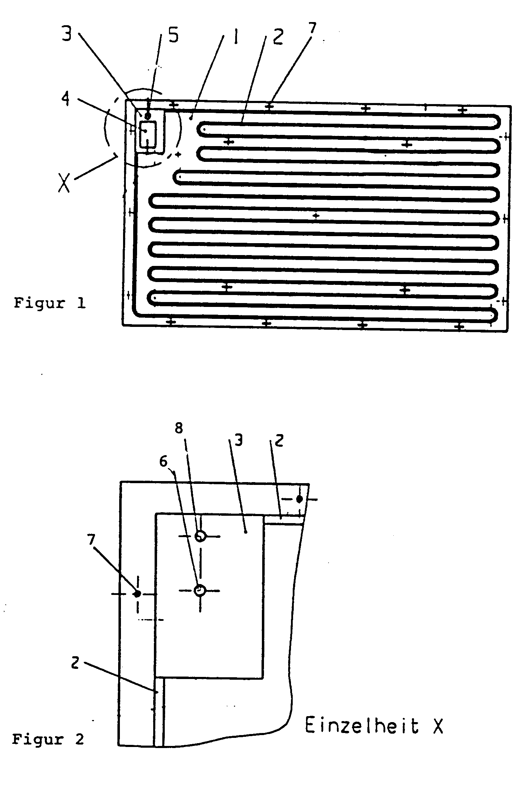

Gemäß Fig. 1 ist innerhalb des monolithischen Flachheizkörpers 1, welcher aus Polymerbeton besteht, ein mäanderförmiger Heizleiter 2 integral angeordnet.

In der Ausnehmung 3, welche in einem Bereich frei von Heizelementen 2 angeordnet ist, findet der Thermostat 4 sowie die äußeren elektrischen Anschlußelemente (nicht gezeigt) Platz. Zur Funktionsanzeige kann im Bereich der Ausnehmung 3 eine Kontrollampe 5 vorgesehen sein.

Befestigungselemente 7 sind an verschiedenen Stellen des Flachheizkörpers 1 vorgesehen, so daß eine spätere Befestigung in beliebiger Lage erfolgen kann.

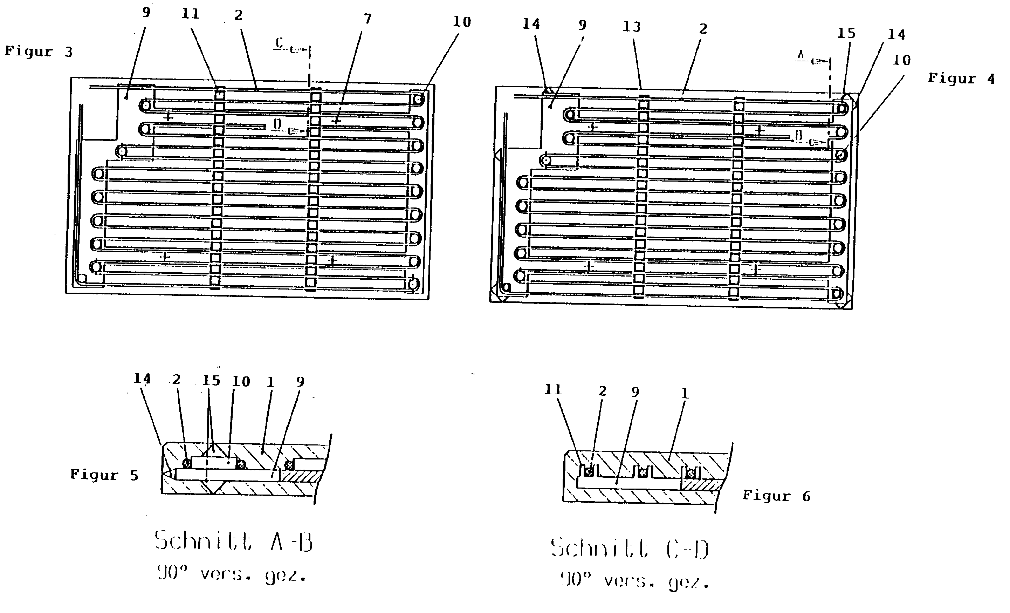

Ein vergrößerter Ausschnitt der Ausnehmung 3 ist in Fig. 2 dargestellt, wobei in einer Durchführungsbohrung 8 ein Anzeigelement, z.B. die vorerwähnte Kontrollampe 5 oder eine Glimmlampe angeordnet ist. Die Durchführungsbohrung 6 dient der Aufnahme der Betätigungsachse des Thermostaten 4. Im übrigen entsprechen die Bezugszeichen denen der Fig. 1.

Aus den Fig. 1 und 2 ist deutlich zu erkennen, daß im Bereich der Ausnehmung 3 zur Aufnahme des Thermostaten 4 keine Heizleitermäander vorgesehen sind, so daß sich hier die gewünschte Mischtemperatur aus Umgebungstemperatur und Heizkörpertemperatur ausbilden bzw. einstellen kann. Durch diese Ausbildung werden z.B. Temperaturschwankungen, die bei der Raumlüftung entstehen, durch die gespeicherte Wärme des Heizkörpers überbrückt, so daß bei kurzer, effektiver Raumlüftung ein unerwünschtes Einschalten des Thermostaten 4 bzw. des Flachheizkörpers 1 ausgeschlossen ist.

Dadurch, daß der Thermostat 4 von den Innenwänden bzw. -flächen der Aussparung 3 beabstandet ist, besteht kein direkter Wärmekontakt zwischen dem wärmeempfindlichen Teil des Thermostaten 4, z.B. einem Bimetall und dem Flachheizkörper 1. Der zwischen dem Thermostaten 4 und dem Heizkörper 1 befindliche Luftzwischenraum verbessert das vorerwähnte Ansprech- und Regelverhalten, so daß trotz der Anordnung des Thermostaten 4 in dem Heizkörper 1 eine Quasi-Raumtemperatur erfaßt wird.

Die Ausnehmung 3 ist von einem nicht gezeigten Deckel verschlossen, der einerseits den Thermostaten 4 anpresst, so daß hier auf separate Befestigungsmittel verzichtet werden kann und andererseits dem Herausführen der äußeren Anschlußelemente sowie der Abdichtung dient.

Vorteilhafterweise wird ein mit dem elektrischen Heizleiter 2 in Serie geschalteter Temperaturwächter zur Erfassung von Übertemperaturen (nicht gezeigt), z.B. mittig bzw. im Schwerpunkt des Flachheizkörpers angeordnet. Alternativ kann beim Vergießen ein metallischer Draht oder ein metallisches Band als Wärmeleiter eingelegt werden, wobei ein freies Ende des Bandes in die Aussparung 3 reicht und dort mit dem zusätzlichen Temperaturwächter kontaktiert wird.

Mit der Fig. 3 wird eine Ausführungsform der Erfindung unter Nutzung des Gitterrahmens 9 illustriert. Wie erkennbar, ist der elektrische Heizleiter 2 auf den Gitterrahmen 9 aufgeflochten, wobei durch die scheibenförmigen Umlenkelemente 10 eine Mäanderform des elektrischen Heizleiters 2 realisiert wird.

Mittels der Nuten 11 auf den Streben des Gitterrahmens 9 erfolgt ein weiteres Fixieren des Heizleiters 2 durch das Eindrücken desselben in die Nuten 11.

Die Ausbildung der Nuten 11 wird durch die Darstellung nach Fig. 6 besonders deutlich, wobei auch hier das vollständige Umschließen des Gitterrahmens 9 einschließlich des Heizleiters 2 durch den den monolithischen Flachheizkörper 1 bildenden Polymerbeton sichtbar ist.

Zum Erreichen einer vorgegebenen Lage des Gitterrahmens 9 in der Fertigungsform 13, verfügt selbiger nach Fig. 4 über seitliche Abstandshalter 14 und oben und unten angeordnete Abstandshalter 15. Wenn erforderlich, können auch in der Mitte des Gitterrahmens 9 weitere Abstandshalter vorgesehen sein.

Die oberen und unteren Abstandshalter 15, die seitlichen Abstandshalter 14 sowie die scheibenförmigen Umlenkelemente 10 nach Fig. 5 können gemeinsam mit der Herstellung des Gitterrahmens 9 ausgebildet werden.

Alternativ kann der Gitterrahmen 9 an den integrierten äußeren Befestigungselementen so in der Fertigungsform gehalten werden, daß eine vorgegebene, vorteilhafterweise mittige Lage und ein gleichmäßiges Umgießen zum Erzielen einer glatten Oberfläche gesichert ist.

Zweckmäßigerweise können ein oder mehrere Standard-Gitterrahmen 9 mit vorgebbarer elektrischer Leistung der enthaltenen Heizleiter 2 vorgesehen werden, welche in unterschiedlich dimensionierte Fertigungsformen 13 einlegbar sind. Neben der Anpassung an unterschiedliche räumlich/ geometrische Verhältnisse, ist auch eine leichtere elektrische Anpassung durch Reihen- oder Parallelschaltung der derart gebildeten Heizleitergruppen möglich.

In einer Ausführungsform der Erfindung wird ein flexibler isolierter elektrischer Heizleiter mit einem Widerstand von 5 Ω je m Länge benutzt, wobei ca. 13 m Heizleiter auf dem Gitterrahmen 9 aufgeflochten sind, so daß sich eine Heizleistung von ca. 800 W ergibt.

Die Realisierung einer Variante des Verfahrens erfolgt beispielsweise dadurch, daß in eine speziell ausgebildete Fertigungsform, welche über Umlenkstifte sowie Erhebungen zur späteren Aufnahme von Befestigungselementen bzw. der Bedien- und Anzeigeelemente verfügt, der elektrische Heizleiter eingelegt wird, wobei dessen Anschlußelemente in einen abgedeckten Bereich, der formmassefrei bleibt, einmünden.

In diesem abgedeckten Bereich kann dann die spätere Montage des Thermostaten sowie der elektrische Außenanschluß erfolgen.

Alternativ kann die elektrische Kontaktierung und der Anschluß des Thermostaten bereits vor dem Umgießen erfolgen, so daß nur der elektrische Außenanschluß sowie die Betätigungsachse des Thermostaten herausgeführt ist.

Nach dem Einlegen des Heizleiters wird die Form mit einer plastischen Masse von Polymerbeton, gegebenenfalls unter Anwendung von Druck, Unterdruck oder mechanischen Schwingungen aufgefüllt.

Durch die Beigabe von z.B. Farbstoffen oder Naturstein-Füllmitteln, sind eine Vielzahl von Gestaltungsmöglichkeiten des Flachheizkörpers gegeben.

Dadurch, daß nicht nur ebene Formen verwendet werden können, sind Flachheizkörper herstellbar, die über die unterschiedlichsten, auf den jeweiligen Anwendungsfall zugeschnittene , Oberflächenformen verfügen.

Nach erfolgter Aushärtung des Polymerbetons kann der monolithische Flachheizkörper der Form entnommen werden, wobei durch die gewählte Herstellungsart und das verwendete Material sich Nacharbeiten auf ein Mindestmaß reduzieren.

Im Falle der Verwendung des Gitterrahmens wird dieser mit vorher aufgeflochtenem Heizleiter und ggf. mit äußeren Befestigungselementen in die Form eingelegt und, wie vorstehend beschrieben, umspritzt bzw. umgossen oder umpreßt.

Bei der Nutzung eines Gitterrahmens können die verwendeten Formen einfacher ausgebildet sein, da keine Stifte oder ähnliches zum zeitweiligen Fixieren des Heizleiters notwendig sind.

Der Ablauf bei der Herstellung der Flachheizkörper wird nachstehend geschildert.

Zunächst wird die Fertigungsform mit im wesentlichen 50% der je Flachheizkörper erforderlichen Polymerbetonmasse unter Rütteln gefüllt.

Danach wird der mit den Heizleitern versehene vorgefertigte Gitterrahmen mit den Heizleitern nach unten in die Fertigungsform eingelegt. Die Heizleiterenden, welche zum elektrischen Anschluß dienen, werden in ein zur Bildung der Aussparung 3 dienendes Einlegeteil eingefädelt.

Anschließend wird der Rest der Polymerbetonmasse, gegebenenfalls unter erneutem Rütteln in die Form eingefüllt. Nach erfolgter Aushärtung der Polymerbetonmasse wird der Flachheizkörper aus der Fertigungsform entnommen und das Einlegeteil entfernt.

Mit dem Einsetzen des Thermostaten 4 und dem elektrischen Anschluß desselben und dem Verschluß der Aussparung 3 ist die Heizung fertiggestellt und betriebsbereit.

Mittels der Erfindung ist also zusammenfassend die Schaffung eines neuartigen Flachheizkörpers möglich, der durch das spezielle Herstellungsverfahren über eine hohe Wärmekapazität verfügt, da keine Hohlräume oder nachträglich zu verfüllende Aussparungen für die Heizleiter vorhanden sind. Der Heizkörper selbst kann in den unterschiedlichsten Formen realisiert werden, so daß sich neue Anwendungsgebiete, beispielsweise in Raumecken ergeben.

Durch die einfache Möglichkeit, den verwendeten Polymerbeton unterschiedlich geometrisch und farblich zu gestalten, ergibt sich ein besonders dekorativer Effekt.

Da der verwendete Polymerbeton im Verhältnis zu Naturstein eine geringere Masse besitzt, kann der Flachheizkörper an Wänden geringer Tragfestigkeit befestigt werden. Auch ist durch die Massereduzierung eine leichtere Montage des Heizkörpers möglich.

## Patentansprüche

1. Flachheizkörper mit im Innern angeordneten mäanderförmigen flexiblen elektrischen Heizleitern,
umfassend
einen in einem Formspritz-, Gieß- oder Pressverfahren gebildeten monolithischen Körper (1) beliebiger Form, welcher die flexiblen elektrischen Heizleiter (2) vollständig umschließt
**dadurch gekennzeichnet,**
daß der monolithische Körper (1) aus Polymerbeton besteht und der elektrische Heizleiter (2) so ausgebildet ist, daß je Meter Länge desselben eine elektrische Leistung von im wesentlichen 60 Watt umsetzbar ist.

2. Flachheizkörper nach Anspruch 1,
**dadurch gekennzeichnet,**
daß der monolithische Körper (1) einen vorgefertigten Gitterrahmen (9) aus Polymerbeton mit darauf aufgeflochtenen flexiblen elektrischen Heizleitern (2) allseitig umschließt.

3. Flachheizkörper nach Anspruch 2,
**dadurch gekennzeichnet,**
daß der Gitterrahmen (9) über integrierte scheibenförmige Umlenkelemente (10) und Nuten (11) zur Aufnahme des elektrischen Heizleiters (2) sowie über äußere Befestigungselemente (7) verfügt.

4. Flachheizkörper nach Anspruch 2 oder 3,
**dadurch gekennzeichnet,**
daß der Gitterrahmen (9) integrierte seitliche und obere sowie untere Abstandshalter (14, 15) aufweist.

5. Flachheizkörper nach Anspruch 1 oder 2,
**dadurch gekennzeichnet,**
daß daß der monolithische Körper (1) eine Aussparung (3) in einem Bereich, welcher frei von mäanderförmig angeordneten elektrischen Heizleitern (2) ist, zur Aufnahme eines Thermostaten (4) aufweist, wobei der Thermostat (4) nicht in direktem Wärmekontakt zum monolithischen Körper (1) steht.

6. Flachheizkörper nach Anspruch 1 oder 5,
**dadurch gekennzeichnet,**
daß der monolithische Körper (1) in einem rückseitigen Bereich integrierte Befestigungs- bzw. Halterungselemente (7) aufweist.

## Claims

1. A flat heating body having flexible electrical heating conductors of a meander configuration which are disposed in its interior, including a monolithic body (1) of any form which is formed in an injection moulding, casting or pressing process and which completely encloses the flexible electrical heating conductors (2), characterised in that the monolithic body (1) comprises polymer concrete and the electrical heating conductor (2) is of such a configuration that an electrical power of substantially 60 watts can be converted for each meter of length thereof.

2. A flat heating body according to claim 1 characterised in that the monolithic body (1) encloses on all sides a prefabricated grid frame (9) of polymer concrete with flexible electrical heating conductors (2) laced thereon.

3. A flat heating body according to claim 2 characterised in that the grid frame (9) has integrated disc-like direction-changing elements (10) and grooves (11) for receiving the electrical heating conductor (2), and outer fixing elements (7).

4. A flat heating body according to claim 2 or claim 3 characterised in that the grid frame (9) has integrated lateral and upper as well as lower spacers (14, 15).

5. A flat heating heating body according to claim 1 or claim 2 characterised in that the monolithic body (1) has an opening (3) in a region which is free from heating conductors (2) arranged in a meander configuration, for receiving a thermostat (4), wherein the thermostat (4) is not in direct thermal contact with the monolithic body (1).

6. A flat heating body according to claim 1 or claim 5 characterised in that the monolithic body (1) has integrated fixing or holding elements (7) in a region on its rear side.

## Revendications

1. Radiateur en panneau présentant des conducteurs électriques chauffants flexibles disposés en méandres à l'intérieur,
comprenant
un corps (1) monolithique formé selon un procédé de moulage par injection, par coulée ou par compression, de forme quelconque, qui englobe totalement les conducteurs électriques chauffants (2) flexibles,
caractérisé en ce que
le corps monolithique (1) est composé en béton de polymère et chaque mètre de la longueur du conducteur électrique chauffant (2) peut être converti en une puissance électrique de sensiblement 60 Watts.

2. Radiateur en panneau selon la revendication 1,
caractérisé en ce que
le corps monolithique (1) englobe, de tous les côtés, un cadre treillissé (9) préfabriqué en béton de polymère sur lequel sont entrelacés les conducteurs électriques chauffants (2) flexibles.

3. Radiateur en panneau selon la revendication 2,
caractérisé en ce que
le cadre treillissé (9) dispose d'éléments externes de fixation (7), d'éléments intégrés (10) formant poulie de renvoi et de rainures (11) pour le logement du conducteur électrique chauffant (2).

4. Radiateur en panneau selon la revendication 2 ou 3,
caractérisé en ce que
le cadre treillissé (9) présente des écarteurs intégrés latéraux, supérieurs et inférieurs (14, 15).

5. Radiateur en panneau selon la revendication 1 ou 2,
caractérisé en ce que
le corps monolithique (1) présente, dans une zone épargnée par les conducteurs électriques chauffants (2) décrivant des méandres, un évidement (3) pour l'installation d'un thermostat (4), thermostat (4) qui n'est pas en contact thermique direct avec le corps monolithique (1).

6. Radiateur en panneau selon la revendication 1 ou 5,
caractérisé en ce que
le corps monolithique (1) présente, dans une zone arrière, des éléments intégrés de fixation respectivement de retenue (7).
